# EUROPEAN PATENT SPECIFICATION

(11) **EP 4 353 776 B1**
(45) Date of publication and mention of the grant of the patent: **06.08.2025**
(21) Application number: 23796725.2
(22) Date of filing: 24.04.2023
(51) Int. Cl.: C08K 5/549, C08K 5/5435, C08K 5/09, C08K 5/50, C08L 67/04, C08G 63/91

(54) **HIGHLY BRANCHED POLYLACTIDE RESIN AND METHOD FOR PREPARING THE SAME**
HOCHVERZWEIGTES POLYLACTIDHARZ UND VERFAHREN ZU DESSEN HERSTELLUNG
RÉSINE DE POLYLACTIDE HAUTEMENT RAMIFIÉE ET SON PROCÉDÉ DE PRÉPARATION

(30) Priority: 26.04.2022 KR 20220051459
(43) Date of publication of application: 17.04.2024
(73) Proprietor: LG Chem, Ltd., Yeongdeungpo-gu Seoul 07336 (KR)
(72) Inventor: PARK, Si Jung, Daejeon 34122 (KR); WOO, Won Hee, Daejeon 34122 (KR); CHOI, Heung Yeal, Daejeon 34122 (KR); OH, Wan Kyu, Daejeon 34122 (KR)
(74) Representative: Goddar, Heinz J.
(86) International application number: PCT/KR2023/005519
(87) International publication number: WO 2023/211078

(56) References cited:
- KR-A- 19980 703 538
- US-A- 5 925 726
- US-B2- 8 853 330
- KILIC NILAY T., CAN BUSE N., KODAL MEHMET, OZKOC GURALP: "Compatibilization of PLA/PBAT blends by using Epoxy‐POSS", JOURNAL OF APPLIED POLYMER SCIENCE, JOHN WILEY & SONS, INC., US, vol. 136, no. 12, 20 March 2019 (2019-03-20), US , pages 47217, XP093100473, ISSN: 0021-8995, DOI: 10.1002/app.47217
- BALGUDE DINESH BAPURAO, SABNIS ANAGHA SHYAMSUNDER, GHOSH SWAPAN KUMAR: "Designing of cardanol based polyol and its curing kinetics with melamine formaldehyde resin", DESIGNED MONOMERS AND POLYMERS, vol. 20, no. 1, 1 January 2017 (2017-01-01), pages 177 - 189, XP093100474, DOI: 10.1080/15685551.2016.1231030
- GUADAGNO L., VERTUCCIO L., NADDEO C., CALABRESE E., BARRA G., RAIMONDO M., SORRENTINO A., BINDER W.H., MICHAEL P., RANA S.: "Self-healing epoxy nanocomposites via reversible hydrogen bonding", COMPOSITES PART B, ELSEVIER, AMSTERDAM, NL, vol. 157, 1 January 2019 (2019-01-01), AMSTERDAM, NL, pages 1 - 13, XP093100475, ISSN: 1359-8368, DOI: 10.1016/j.compositesb.2018.08.082
- KILIC NILAY TUCCAR, CAN BUSE NUR, KODAL MEHMET, OZKOC GURALP: "The Potential Use of Epoxy‐POSS as a Reactive Hybrid Compatibilizers for PLA/PBAT Blends: “Effect of PBAT Molecular Weight and POSS Type”", POLYMER ENGINEERING AND SCIENCE, BROOKFIELD CENTER., US, vol. 60, no. 2, 1 February 2020 (2020-02-01), US , pages 398 - 413, XP093100476, ISSN: 0032-3888, DOI: 10.1002/pen.25295

## Description

### [TECHNICAL FIELD]

The present disclosure relates to a polylactide resin composition, and a highly branched polylactide resin prepared therefrom, and a method for preparing the same.

### [BACKGROUND ART]

Conventional petroleum-based plastic materials do not naturally decompose, which causes serious environmental pollution. Thus, finding a material to replace them is the top priority research issue in recent years. In particular, plastic foam is widely used as a cushioning material for packaging, but in the case of EPS (Expanded polystyrene) which is most frequently used in the art, it not only does not decompose, but also causes environmental pollution such as generating toxic gases during combustion.

Polylactide (or polylactic acid; PLA) resin, which is a promising alternative to petroleum-based plastic materials, is prepared based on biomass materials, and is an eco-friendly material which emits less global warming gas carbon dioxide during the production process, and is degraded by a specific temperature and composting facility. In addition, the polylactide resin has advantages that it is inexpensive compared to other biodegradable polymers and has high tensile strength and modulus properties.

However, the polylactide resin has disadvantages that it has low thermal stability and impact resistance, slow crystallization rate, and especially low melt strength, making it difficult to use for foam applications. Thus, various methods are known to improve the melt strength of polylactide resin. As an example, a method of increasing LCB (long chain branch) of the polylactide resin to perform branching is known.

Although various branching agents that can be applied to polylactide resins have been known in the past, they have limitations in highly branching polylactide resins. Therefore, the present inventors have found that by using a specific branching agent and anhydride-based compound in the polylactide resin as will be described later, a high degree of branching of the polylactide resin, which has not been achieved hitherto, is achieved, and completed the present disclosure.

US 5,925,726 A discloses a process for preparing a melt-processable, hydroxy acid-based polymer, comprising: forming a low molecular weight polyester-prepolymer from hydroxy acid monomers; and copolymerizing the prepolymer with a monomer which reacts with terminal groups of the prepolymer in order to form a polymer having a high molecular weight, wherein the prepolymer is provided with carboxy-terminal groups, and said carboxy-terminated polyester-prepolymer is copolymerized with a diepoxy compound in order to form a copolyester.

US 8,853,330 B2 discloses a polymer comprising a polyester block and a polyacrylate block, wherein the polyester is capable of forming a stereocomplex with a compound comprising a complimentary polyester and the polyacrylate block comprises at least one polyhedral oligomeric silsesquioxane moiety.

Journal of Applied Polymer Science, vol. 136, no. 12, 47217, discloses the reaction of an epoxy group with carboxylic acid and a hydroxy group, so that a branched, hyperbranched or crosslinked polymer may be formed using glycidyl-POSS.

### [DETAILED DESCRIPTION OF THE INVENTION]

### [Technical Problem]

It is an object of the present disclosure to provide a polylactide resin composition for preparing a highly branched polylactide resin.

It is another object of the present disclosure to provide a highly branched polylactide resin prepared from the polylactide resin composition, and a method for preparing the same

### [Technical Solution]

In order to achieve the above object, according to one aspect of the present disclosure, there is provided the following polylactide resin composition:
A polylactide resin composition comprising:
100 parts by weight of a polylactide resin,
0.05 to 1.0 parts by weight of an organic acid anhydride;
0.05 to 1.0 parts by weight of a phosphorus-based compound, and
0.1 to 5.0 parts by weight of a branching agent represented by Chemical Formula 1: 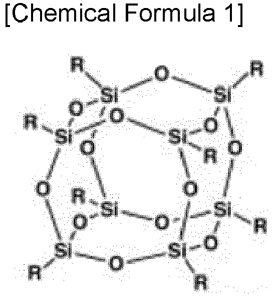
in Chemical Formula 1,
R is

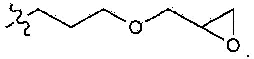

As used herein, the term "polylactide resin" is defined as comprehensively referring to a homopolymer or copolymer including a repeating unit represented by the following Chemical Formula.

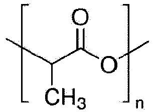

The polylactide resin can be prepared by a process including a step of forming the above repeating unit by the ring opening polymerization of the lactide monomer. The polymer obtained after the completion of such ring opening polymerization and the formation of the repeating unit can be referred to as the "polylactide resin".

At this time, the term "lactide monomer" can be defined as follows. Typically, lactides can be classified into L-lactide consisting of L-lactic acid, D-lactide consisting of D-lactic acid, and meso-lactide consisting of an L-type and a D-type. Also, a mixture of L-lactide and D-lactide in a ratio of 50:50 is referred to as D,L-lactide or rac-lactide. Among these lactides, the polymerization proceeding only with either of L-lactide and D-lactide that have a high level of optical purity is known to yield an L- or D-polylactide (PLLA or PDLA) with a high level of stereoregularity. Such polylactides have a faster crystallization rate and also a higher crystallinity degree than a polylactide having a low level of optical purity. However, the term "lactide monomer" as used herein is defined to include all types of lactides regardless of the characteristic differences of lactides depending on their shapes and the characteristic differences of the polylactide resins obtained therefrom.

Meanwhile, the polylactide resin composition according to the present disclosure has a weight average molecular weight of 70,000 to 400,000 as an example.

As used herein, the term "organic acid anhydride" refers to a compound derived by the removal of water molecules from an organic acid, and particularly, in the present disclosure, the organic acid anhydride reacts with the terminal hydroxy group (-OH) of the polylactide resin, which serve to make the terminal of the polylactide resin have a carboxyl group (-COOH). This further facilitates the reaction between the terminal carboxy group of the polylactide resin and the epoxy group present in the branching agent, which leads to a high degree of branching of the polylactide resin.

From this point of view, the organic acid anhydride is not particularly limited as long as it is a substance that reacts with the terminal hydroxy group (-OH) of the polylactide resin and makes the terminal of the polylactide resin have a carboxyl group (-COOH). Examples thereof include succinic anhydride, maleic anhydride, phthalic anhydride, or pyromellitic dianhydride.

Preferably, the organic acid anhydride is contained in an amount of 0.06 parts by weight or more, 0.07 parts by weight or more, 0.08 parts by weight or more, 0.09 parts by weight or more, or 0.10 parts by weight or more; and 0.9 parts by weight or less, 0.8 parts by weight or less, 0.7 parts by weight or less, 0.6 parts by weight or less, 0.5 parts by weight or less, 0.4 parts by weight or less, 0.3 parts by weight or less, or 0.2 parts by weight or less, based on 100 parts by weight of the polylactide resin.

The branching agent of Chemical Formula 1 is a polyhedral oligomeric silsesquioxane (POSS) compound in which each silicone (Si) atom is substituted with a glycidyl group, and the epoxy group of the glycidyl and the polylactide resin having a terminal carboxyl group (-COOH) to enable branching of the polylactide resin.

Preferably, the branching agent of Chemical Formula 1 is contained in an amount of 0.2 parts by weight or more, 0.3 parts by weight or more, 0.4 parts by weight or more, 0.5 parts by weight or more, 0.6 parts by weight or more, 0.7 parts by weight or more, 0.8 parts by weight or more, 0.9 parts by weight or more, or 1.0 parts by weight or more; and 4.0 parts by weight or less, 3.0 parts by weight or less, or 2.0 parts by weight or less, based on 100 parts by weight of the polylactide resin.

The phosphorus-based compound acts as a nucleophile and induces ring opening of the epoxy group of the branching agent of Chemical Formula 1 to cause chain extension. When the phosphorus-based compound is not added, the reaction between the polylactide resin and the branching agent of Chemical Formula 1 does not occur under general mixing conditions.

Preferably, the phosphorus-based compound is a compound represented by Chemical Formula 2: 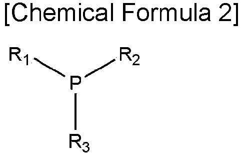 in Chemical Formula 2,
R₁, R₂ and R₃ are each independently a C₁₋₂₀ alkyl; a C₃₋₂₀ cycloalkyl; phenyl unsubstituted or substituted with at least one C₁₋₂₀ alkyl, or C₁₋₂₀ alkoxy; or benzyl.

Preferably, the phosphorus-based compound is triphenylphosphine, tri-m-tolylphosphine, diphenyl(para-tolyl)phosphine, tris(2,6-dimethoxyphenyl)phosphine, tris(4-methoxyphenyl)phosphine, trimesitylphosphine, tris-3,5-xylylphosphine, tricyclohexylphosphine, tribenzylphosphine, benzyldiphenylphosphine, or diphenyl-normal-propylphosphine, more preferably, triphenylphosphine.

Preferably, the phosphorus-based compound is contained in an amount of 0.06 parts by weight or more, 0.07 parts by weight or more, 0.08 parts by weight or more, 0.09 parts by weight or more, or 0.10 parts by weight or more; and 0.9 parts by weight or less, 0.8 parts by weight or less, 0.7 parts by weight or less, 0.6 parts by weight or less, 0.5 parts by weight or less, 0.4 parts by weight or less, 0.3 parts by weight or less, or 0.2 parts by weight or less, based on 100 parts by weight of the polylactide resin.

According to another aspect of the present disclosure, there is provided a branched polylactide resin composition, which is prepared by heat-treating the above-mentioned polylactide resin composition.

As described above, the branching agent contained in in the polylactide resin composition reacts with the polylactide resin having a carboxyl group (-COOH) terminal to enable branching of the polylactide resin, and a predetermined heat treatment progresses for the above reaction. A specific method for preparing the branched polylactide resin will be described later.

Branching of the polylactide resin progresses as described above, so that the molecular weight of the branched polylactide resin is higher than that of the polylactide resin contained in the polylactide resin composition. Preferably, the branched polylactide resin has a weight average molecular weight of 200,000 to 800,000. Further, preferably, the weight average molecular weight of the branched polylactide resin is increased by 1.5 to 5.0 times that of the polylactide resin contained in the polylactide resin composition.

More preferably, the weight average molecular weight of the branched polylactide resin is 250,000 or more, 300,000 or more, or 350,000 or more, and 750,000 or less, 700,000 or less, 650,000 or less, 600,000 or less, or 550,000 or less.

Moreover, branching progresses as described above, so that the molecular weight distribution (Mw/Mn) of the branched polylactide resin is preferably 1.5 to 3.0 or 2.0 to 3.0. More preferably, the molecular weight distribution (Mw/Mn) of the branched polylactide resin is 1.8 or more, or 1.9 or more, and 2.9 or less, 2.8 or less, 2.7 or less, 2.6 or less, or 2.5 or less.

Preferably, the branched polylactide resin has a Z average molecular weight of 1,000,000 to 2,000,000.

According to yet another aspect of the present disclosure, there is provided a method for preparing the branched polylactide resin described above, comprising the steps of:
1) mixing a polylactide resin and an organic acid anhydride at 170°C to 200°C (step 1); and
2) mixing the product of step 1 with the branching agent of Chemical Formula 1 and the phosphorus-based compound (step 2).

Step 1 is a step of reacting the terminal hydroxy group (-OH) of the polylactide resin with an organic acid anhydride to make the terminal of the polylactide resin have a carboxy group (-COOH), which is a step performed prior to the reaction of the polylactide resin and the branching agent.

Step 2 is a step of reacting the polylactide resin that has a carboxy group (-COOH) at the terminal due to step 1, with the epoxy group of the branching agent of Chemical Formula 1, wherein the phosphorus compound is added together for ring opening of the epoxy group, to prepare the branched polylactide resin according to the present disclosure.

Preferably, the mixing time of step 1 is 30 seconds to 3 minutes. Preferably, the mixing time of step 2 is 3 minutes to 15 minutes.

### [Advantageous Effects]

The above-mentioned branched polylactide resin according to the present disclosure has a feature that it is highly branched and thus can be applied to processes that were difficult to apply to conventional polylactide resins such as expanded foam.

### [DETAILED DESCRIPTION OF THE EMBODIMENTS]

Below, embodiments of the present disclosure will be described in more detail with reference to examples. However, the following examples are for illustrative purposes only and are not intended to limit the scope of the present disclosure.

### Example 1

50 g of PLA (4032D from NatureWorks; weight average molecular weight of about 210,000), and 0.2 wt% of succinic anhydride as an anhydride-based material based on the weight of the PLA was placed in a Brabender mixer, and mixed at 180°C for 2 minutes. After stopping for a while, an additional branching agent (Glycidyl POSS cage mixture, from Hybrid Plastics; product number EP0409; hereinafter referred to as 'POSS') was added at 1 wt% together with 0.2 wt% of TPP based on the weight of the PLA, and mixed for 10 minutes to prepare branched polylactide resins.

### Examples 2 to 10

Branched polylactide resins were respectively prepared in the same manner as in Example 1, except that the type and content of anhydride-based material, the content of the branching agent, and/or the content of TPP were varied as shown in Table 1 below.

### Comparative Examples 1 to 6

Polylactide resins were respectively prepared in the same manner as in Example 1, except that the types or amounts of the anhydride compounds, TPP (triphenylphosphine) and branching agents were varied as shown in Table 1 below.

### Experimental Example

The degree of branching of the resins prepared in Examples and Comparative Examples were measured using MALS-GPC. Mw, Mz, PDI, and Mark-Houwink slopes were measured by MALS-GPC, and specific measurement conditions are as follows.
Column: PLgel mixed-B x 2
Solvent: Tetrahydrofuran (Stabilized with BHT)
Flow rate: 1.0 ml/min
Sample concentration: 3.0 mg PLA / 1.0 mL THF
Injection volume: 100 µl
Column temperature: 40 °C
Detector: Viscotek TDA 305
Data Processing: OmniSEC

The higher the values of Mw, Mz, and PDI, and the lower the values of the Mark-Houwink slope, show better branching, and the results are shown in Table 1 below.

**[Table 1]**

| | Anhydride | | Branching agent | | TPP | Mw | Mz | PDI | Mark-Houwink slope |
|---|---|---|---|---|---|---|---|---|---|
| | Type | Content (wt%) | Type | Content (wt%) | Content (wt%) | | | | |
| Example 1 | Succinic anhydride | 0.2 | POSS | 1.0 | 0.2 | 481.6k | 1663.0k | 2.28 | 0.26 |
| Example 2 | Succinic anhydride | 0.1 | POSS | 1.0 | 0.2 | 426.3k | 1381.5k | 2.24 | 0.28 |
| Example 3 | Succinic anhydride | 0.2 | POSS | 1.5 | 0.2 | 550.8k | 1870.2k | 2.39 | 0.23 |
| Example 4 | Succinic anhydride | 0.2 | POSS | 1.0 | 0.1 | 473.2k | 1592.1k | 2.25 | 0.25 |
| Example 5 | Phthalic anhydride | 0.2 | POSS | 1.0 | 0.2 | 368.9k | 1141.0k | 2.04 | 0.50 |
| Example 6 | Phthalic anhydride | 0.1 | POSS | 1.0 | 0.2 | 341.8k | 1060.1k | 2.03 | 0.31 |
| Example 7 | Phthalic anhydride | 0.2 | POSS | 1.5 | 0.2 | 413.5k | 1312.5k | 2.12 | 0.27 |
| Example 8 | Maleic anhydride | 0.2 | POSS | 1.0 | 0.2 | 513.2k | 1882.1k | 2.41 | 0.23 |
| Example 9 | Maleic anhydride | 0.1 | POSS | 1.0 | 0.2 | 471.5k | 1658.3k | 2.29 | 0.24 |
| Example 10 | Maleic anhydride | 0.2 | POSS | 1.5 | 0.2 | 612.7k | 1920.4k | 2.46 | 0.21 |
| Comparative Example 1 | - | - | POSS | 1.0 | 0.2 | 337.5k | 948.7k | 2.23 | 0.31 |
| Comparative Example 2 | - | - | - | - | | 125.2k | 162.3k | 1.27 | 0.71 |
| Comparative Example 3 | - | - | POSS | 1.0 | | 115.6k | 149.0k | 1.24 | 0.73 |
| Comparative Example 4 | - | - | - | - | 0.2 | 118.3k | 150.6k | 1.24 | 0.73 |
| Comparative Example 5 | Succinic anhydirde | 0.2 | POSS | 1.0 | - | 117.2k | 148.0k | 1.23 | 0.73 |
| Comparative Example 6 | - | - | HMDI¹⁾ | 1.0 | | 400.0k | 930.0k | 2.10 | 0.40 |
| 1) HMDI: Hexamethylene diisocyanate | | | | | | | | | |

As shown in Table 1, it was confirmed that Examples according to the present disclosure had a higher molecular weight distribution than Comparative Examples, and were low in Mark-Houwink slop values to achieve better branching. In particular, it was confirmed that branching of POSS did not occur when TPP was not used, and there was almost no difference between 0.1wt% TPP usage and 0.2wt% TPP usage. Further, it was confirmed that when substituting the -OH group of the polylactide resin with a -COOH group using an anhydride-based compound, it reacted more easily with the epoxy group of POSS, and branching progressed better than when POSS was added alone. In the case of maleic anhydride, the highest molecular weight could be obtained, but it was confirmed visually that a large amount of gel was also produced.

## Claims

1. A polylactide resin composition comprising:
100 parts by weight of a polylactide resin,
0.05 to 1.0 parts by weight of an organic acid anhydride;
0.05 to 1.0 parts by weight of a phosphorus-based compound, and
0.1 to 5.0 parts by weight of a branching agent represented by Chemical Formula 1: 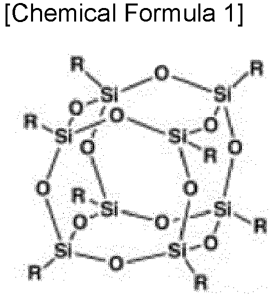
in Chemical Formula 1,
R is

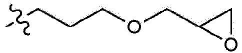

2. The polylactide resin composition of claim 1, wherein:
the organic acid anhydride is succinic anhydride, maleic anhydride, phthalic anhydride, or pyromellitic dianhydride.

3. The polylactide resin composition of claim 1, wherein:
the organic acid anhydride is contained in an amount of 0.1 to 0.2 parts by weight.

4. The polylactide resin composition of claim 1, wherein:
the phosphorus-based compound is represented by the following Chemical Formula 2: 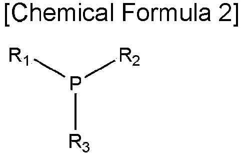
in Chemical Formula 2,
R₁, R₂ and R₃ are each independently a C₁₋₂₀ alkyl; a C₃₋₂₀ cycloalkyl; phenyl unsubstituted or substituted with at least one C₁₋₂₀ alkyl, or C₁₋₂₀ alkoxy; or benzyl.

5. The polylactide resin composition of claim 1, wherein:
the phosphorus-based compound is triphenylphosphine.

6. The polylactide resin composition of claim 1, wherein:
the branching agent of Chemical Formula 1 is contained in an amount of 0.1 to 2.0 parts by weight.

7. The polylactide resin composition of claim 1, wherein:
the polylactide resin has a weight average molecular weight of 70,000 to 400,000, wherein the weight average molecular weight is measured by MALS-GPC as disclosed in the specification.

8. A branched polylactide resin, which is prepared by heat-treating the polylactide resin composition of any one of claims 1 to 7.

9. The branched polylactide resin of claim 8, wherein:
the branched polylactide resin has a weight average molecular weight of 200,000 to 800,000, wherein the weight average molecular weight is measured by MALS-GPC as disclosed in the specification.

10. The branched polylactide resin of claim 8, wherein:
the branched polylactide resin has a weight average molecular weight of 350,000 to 550,000, wherein the weight average molecular weight is measured by MALS-GPC as disclosed in the specification.

11. The branched polylactide resin of claim 8, wherein:
the branched polylactide resin has a Z average molecular weight of 1,000,000 to 2,000,000, wherein the Z-average molecular weight is measured by MALS-GPC as disclosed in the specification.

12. The branched polylactide resin of claim 8, wherein:
the branched polylactide resin has a molecular weight distribution (Mw/Mn) of 2.0 to 3.0, wherein the molecular weight distribution is measured by MALS-GPC as disclosed in the specification.

13. A method for preparing the branched polylactide resin of claim 8, the method comprising the steps of:
1) mixing a polylactide resin and an organic acid anhydride at 170°C to 200°C (step 1); and
2) mixing the product of step 1 with the branching agent of Chemical Formula 1 and the phosphorus-based compound (step 2).

14. The method of claim 13, wherein:
the mixing time of step 1 is 30 seconds to 3 minutes.

15. The method of claim 13, wherein:
the mixing time of step 2 is 3 to 15 minutes.

## Patentansprüche

1. Polylactidharzzusammensetzung, umfassend:
100 Gewichtsteile eines Polylactidharzes,
0,05 bis 1,0 Gewichtsteile eines organischen Säureanhydrids;
0,05 bis 1,0 Gewichtsteile einer Verbindung auf Phosphorbasis und
0,1 bis 5,0 Gewichtsteile eines Verzweigungsmittels, dargestellt durch die chemische Formel 1: 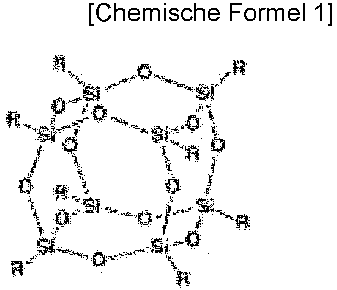
wobei in der chemischen Formel 1
R 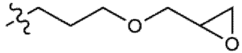 ist.

2. Polylactidharzzusammensetzung nach Anspruch 1, wobei:
das organische Säureanhydrid Bernsteinsäureanhydrid, Maleinsäureanhydrid, Phthalsäureanhydrid oder Pyromellithsäuredianhydrid ist.

3. Polylactidharzzusammensetzung nach Anspruch 1, wobei:
das organische Säureanhydrid in einer Menge von 0,1 bis 0,2 Gewichtsteilen enthalten ist.

4. Polylactidharzzusammensetzung nach Anspruch 1, wobei:
die Verbindung auf Phosphorbasis durch die folgende chemische Formel 2 dargestellt ist: 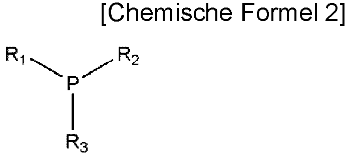
wobei in der chemischen Formel 2
R₁, R₂ und R₃ jeweils unabhängig ein C₁₋₂₀ -Alkyl; ein C₃₋₂₀ -Cycloalkyl; Phenyl, unsubstituiert oder substituiert mit mindestens einem C₁₋₂₀ -Alkyl, oder C₁₋₂₀ - Alkoxy; oder Benzyl sind.

5. Polylactidharzzusammensetzung nach Anspruch 1, wobei:
die Verbindung auf Phosphorbasis Triphenylphosphin ist.

6. Polylactidharzzusammensetzung nach Anspruch 1, wobei:
das Verzweigungsmittel der chemischen Formel 1 in einer Menge von 0,1 bis 2,0 Gewichtsteilen enthalten ist.

7. Polylactidharzzusammensetzung nach Anspruch 1, wobei:
das Polylactidharz ein gewichtsmittleres Molekulargewicht von 70.000 bis 400.000 aufweist, wobei das gewichtsmittlere Molekulargewicht durch MALS-GPC gemessen wird, wie in der Beschreibung offenbart.

8. Verzweigtes Polylactidharz, das durch Wärmebehandeln der Polylactidharzzusammensetzung nach einem der Ansprüche 1 bis 7 hergestellt wird.

9. Verzweigtes Polylactidharz nach Anspruch 8, wobei:
das verzweigte Polylactidharz ein gewichtsmittleres Molekulargewicht von 200.000 bis 800.000 aufweist, wobei das gewichtsmittlere Molekulargewicht durch MALS-GPC gemessen wird, wie in der Beschreibung offenbart.

10. Verzweigtes Polylactidharz nach Anspruch 8, wobei:
das verzweigte Polylactidharz ein gewichtsmittleres Molekulargewicht von 350.000 bis 550.000 aufweist, wobei das gewichtsmittlere Molekulargewicht durch MALS-GPC gemessen wird, wie in der Beschreibung offenbart.

11. Verzweigtes Polylactidharz nach Anspruch 8, wobei:
das verzweigte Polylactidharz ein Z-mittleres Molekulargewicht von 1.000.000 bis 2.000.000 aufweist, wobei das Z-mittlere Molekulargewicht durch MALS-GPC gemessen wird, wie in der Beschreibung offenbart.

12. Verzweigtes Polylactidharz nach Anspruch 8, wobei:
das verzweigte Polylactidharz eine Molekulargewichtsverteilung (Mw/Mn) von 2,0 bis 3,0 aufweist, wobei die Molekulargewichtsverteilung durch MALS-GPC gemessen wird, wie in der Beschreibung offenbart.

13. Verfahren zum Herstellen des verzweigten Polylactidharzes nach Anspruch 8, wobei das Verfahren die Schritte umfasst:
1) Mischen eines Polylactidharzes und eines organischen Säureanhydrids bei 170 °C bis 200 °C (Schritt 1); und
2) Mischen des Produkts von Schritt 1 mit dem Verzweigungsmittel der chemischen Formel 1 und der Verbindung auf Phosphorbasis (Schritt 2).

14. Verfahren nach Anspruch 13, wobei:
die Mischzeit von Schritt 1 30 Sekunden bis 3 Minuten beträgt.

15. Verfahren nach Anspruch 13, wobei:
die Mischzeit von Schritt 2 3 bis 15 Minuten beträgt.

## Revendications

1. Composition de résine de polylactide comprenant:
100 parties en poids d'une résine polylactide,
0,05 à 1,0 parties en poids d'un anhydride d'acide organique;
0,05 à 1,0 partie en poids d'un composé à base de phosphore, et
0,1 à 5,0 parties en poids d'un agent de ramification représenté par la Formule Chimique 1: 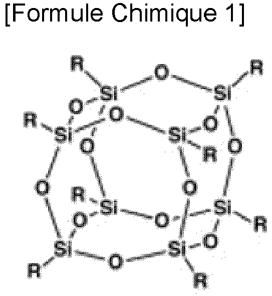
dans la Formule Chimique 1,
R est

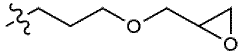

2. Composition de résine polylactide de la revendication 1, dans laquelle:
l'anhydride d'acide organique est l'anhydride succinique, l'anhydride maléique, l'anhydride phtalique ou le dianhydride pyromellitique.

3. Composition de résine polylactide de la revendication 1, dans laquelle:
l'anhydride d'acide organique est contenu dans une quantité de 0,1 à 0,2 parties en poids.

4. Composition de résine polylactide de la revendication 1, dans laquelle:
le composé à base de phosphore est représenté par la formule chimique 2 suivante: 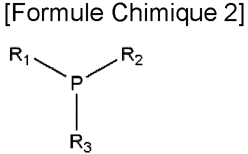
dans la Formule Chimique 2,
R₁, R₂ et R₃ sont chacun indépendamment un alkyle en C₁₋₂₀, un cycloalkyle en C₃₋₂₀, un phényle non substitué ou substitué par au moins un alkyle en C₁₋₂₀ ou un alcoxy en C₁₋₂₀, ou un benzyle.

5. Composition de résine polylactide de la revendication 1, dans laquelle:
le composé à base de phosphore est la triphénylphosphine.

6. Composition de résine polylactide de la revendication 1, dans laquelle :
l'agent de ramification de la Formule Chimique 1 est contenu en une quantité de 0,1 à 2,0 parties en poids.

7. Composition de résine polylactide de la revendication 1, dans laquelle:
la résine polylactide a une masse moléculaire moyenne en poids de 70.000 à 400.000, la masse moléculaire moyenne en poids étant mesurée par MALS-GPC comme indiqué dans la spécification.

8. Résine polylactide ramifiée, préparée par traitement thermique de la composition de résine polylactide de l'une des revendications 1 à 7.

9. Résine polylactide ramifiée de la revendication 8, dans laquelle:
la résine polylactide ramifiée a une masse moléculaire moyenne en poids de 200.000 á 800.000, la masse moléculaire moyenne en poids étant mesurée par MALS-GPC comme indiqué dans la spécification.

10. Résine polylactide ramifiée de la revendication 8, dans laquelle :
la résine polylactide ramifiée a une masse moléculaire moyenne en poids de 350.000 à 550.000, la masse moléculaire moyenne en poids étant mesurée par MALS-GPC comme indiqué dans la spécification.

11. Résine polylactide ramifiée de la revendication 8, dans laquelle :
la résine polylactide ramifiée a une masse moléculaire moyenne en Z de 1.000.000 et 2.000.000, la masse moléculaire moyenne en Z étant mesurée par MALS-GPC comme indiqué dans la spécification.

12. Résine polylactide ramifiée de la revendication 8, dans laquelle:
la résine polylactide ramifiée a une distribution de poids moléculaire (Mw/Mn) de 2,0 à 3,0, la distribution de poids moléculaire étant mesurée par MALS-GPC comme indiqué dans la spécification.

13. Méthode de préparation de la résine polylactide ramifiée de la revendication 8, la méthode comprenant les étapes suivantes:
1) mélange d'une résine polylactide et d'un anhydride d'acide organique entre 170°C et 200°C (étape 1); et
2) mélanger le produit de l'étape 1 avec l'agent de ramification de Formule Chimique 1 et le composé à base de phosphore (étape 2).

14. La méthode de la revendication 13, dans laquelle:
le temps de mélange de l'étape 1 est de 30 secondes à 3 minutes.

15. La méthode de la revendication 13, dans laquelle:
le temps de mélange de l'étape 2 est de 3 à 15 minutes.
